# EUROPEAN PATENT APPLICATION

(11) **EP 4 160 835 A1**
(43) Date of publication of application: **05.04.2023**
(21) Application number: 20937578.1
(22) Date of filing: 29.05.2020
(51) Int. Cl.: H02B 1/20

(54) **BUS CONNECTION DEVICE**

(71) Applicant: MITSUBISHI ELECTRIC CORPORATION, Chiyoda-ku Tokyo 100-8310 (JP)
(72) Inventor: INOUE, Naoaki, Tokyo 100-8310 (JP); KUROAKI, Shintaro, Tokyo 100-8310 (JP); ABE, Junichi, Tokyo 100-8310 (JP)
(74) Representative: Witte, Weller & Partner Patentanwälte mbB
(86) International application number: PCT/JP2020/021271
(87) International publication number: WO 2021/240759

(57) **Abstract**

An object is to provide a bus connection device that can prevent the insulation performance of an insulation bus from being lowered when the insulation bus is connected. A bus connection device (110) includes: an adapter portion (111) into which a solid insulation bus (106) is inserted, the adapter portion (111) having, therein, a connection terminal (111b) having an opening into which a bus conductor (106a) of the solid insulation bus (106) is inserted; a bushing portion (112) having a conductor portion (112a) therein and having one end connected to a gas insulated switchgear and another end inserted into the adapter portion (111), so as to be connected to the insulation bus (106) via the connection terminal (111b); and a conductive contact member (111e) provided to the opening of the connection terminal (111b) so as to contact with the bus conductor (106a).

## Description

### TECHNICAL FIELD

The present disclosure relates to a bus connection device.

### BACKGROUND ART

Conventionally, there has been a switchgear or a gas insulated switchgear with a plurality of electric devices such as switches connected via insulation buses (see, for example, Patent Document 1). For connection of switches and the like, a gas bus type in which bus conductors in a bus tank are connected is generally used, but in recent years, a solid insulation bus may also be used. In the case of the gas bus type, it is necessary to connect a bus tank in installation of a gas insulated switchgear, but in the case of using the solid insulation bus, such work is not needed and thus gas processing work on a site in installation of a gas insulated switchgear can be eliminated.

As described above, there have been increasing cases of using the solid insulation bus for a bus part of the gas insulated switchgear. In the case of using the solid insulation bus, a bushing for connecting a solid insulation bus is provided at each board of the gas insulated switchgear, an adapter is attached to the bushing, and the bushing and the solid insulation bus are connected via the adapter. After the solid insulation bus is connected, an insulating plug is inserted into the adapter and is fixed, whereby the insulation bus connection work is completed.

### CITATION LIST

### PATENT DOCUMENT

Patent Document 1: Japanese Patent No. 6563160

### SUMMARY OF THE INVENTION

### PROBLEMS TO BE SOLVED BY THE INVENTION

However, in the above conventional configuration, the insulation performance of the insulation bus might be lowered when the insulation bus is connected. More specifically, at the time of fixing the insulating plug, a metal fixation screw attached to the bushing is inserted into the adapter and the fixation screw is screwed to an internal thread of the insulating plug, whereby the insulating plug is fixed. When the fixation screw is screwed to the internal thread of the insulating plug, the surface of the fixation screw and the internal thread surface of the insulating plug rub against each other, so that metal chips might be produced from the surface of the fixation screw. The insulation performance of the solid insulation bus might be lowered if the chips enter the insulation interface of the insulating plug.

The present disclosure has been made to solve the above problem, and an object of the present disclosure is to provide a bus connection device that can prevent the insulation performance of an insulation bus from being lowered when the insulation bus is connected.

### SOLUTION TO THE PROBLEMS

A bus connection device according to the present disclosure is a bus connection device for connecting each of a plurality of electric devices and an insulation bus for connecting the plurality of electric devices, the bus connection device including: an adapter portion into which the insulation bus is inserted, the adapter portion having, therein, a connection terminal having an opening into which a bus conductor of the insulation bus is inserted; a bushing portion having a conductor portion therein and having one end connected to the electric device and another end inserted into the adapter portion, so as to be connected to the insulation bus via the connection terminal; and a conductive contact member provided to the opening of the connection terminal so as to contact with the bus conductor.

### EFFECT OF THE INVENTION

The bus connection device according to the present disclosure can prevent the insulation performance of an insulation bus from being lowered when the insulation bus is connected.

### BRIEF DESCRIPTION OF THE DRAWINGS

[FIG. 1] FIG. 1 is a side sectional view showing a gas insulated switchgear according to embodiment 1.
[FIG. 2] FIG. 2 is a side sectional view showing a bus connection device in embodiment 1.
[FIG. 3] FIG. 3 is an enlarged sectional view of a part S in FIG. 2.
[FIG. 4] FIG. 4 illustrates a come-off stopper structure according to embodiment 1.
[FIG. 5] FIG. 5 is an enlarged sectional view showing a bus connection device in embodiment 2.

### DESCRIPTION OF EMBODIMENTS

### Embodiment 1

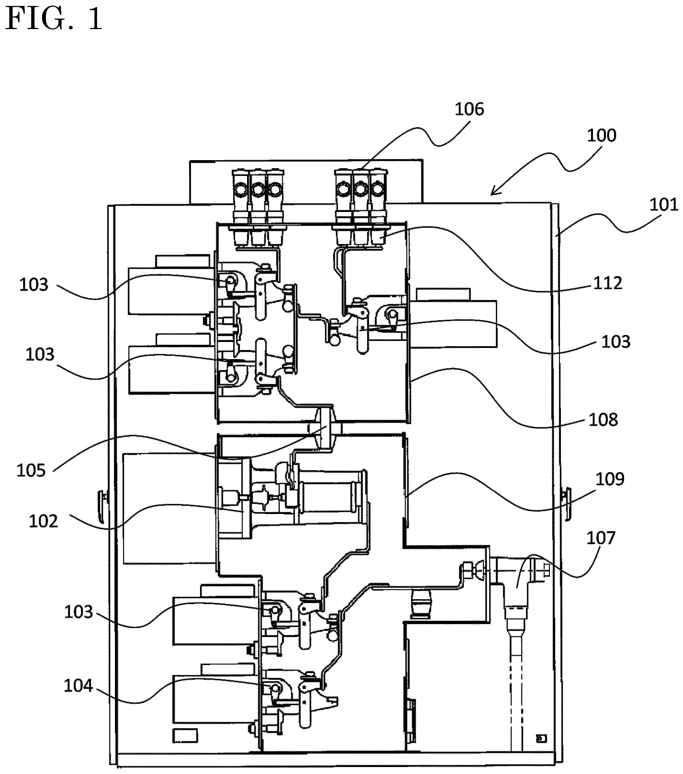

Embodiment 1 will be described with reference to FIG. 1 to FIG. 4. FIG. 1 is a side sectional view showing a gas insulated switchgear according to embodiment 1. A gas insulated switchgear 100 has, inside a housing 101 thereof, a tank 109 for storing a circuit breaker. Inside the tank 109, a circuit breaker 102, a disconnector 103, and a ground switch 104 are stored. The disconnector 103 may be replaced with a ground switch.

A compartment bushing 105 is provided on the upper side of the tank 109. A tank 108 for connecting a bus and storing a disconnector/ground switch is provided on the upper side of the compartment bushing 105. Inside the tank 108, a plurality of disconnectors 103 (or ground switches) are provided, and a bushing portion 112 of a bus connection device 110 described later is provided at an upper surface of the tank 108. The bushing portion 112 has one end inside the tank 108 and another end outside the tank 108. A power cable 107 is provided on the back side of the tank 109.

The bushing portion 112 is connected to a solid insulation bus 106, at the other end, i.e., outside the tank 108. When a plurality of panels of gas insulated switchgears 100 are arranged in a row, the gas insulated switchgears 100 are connected to each other via the solid insulation bus 106.

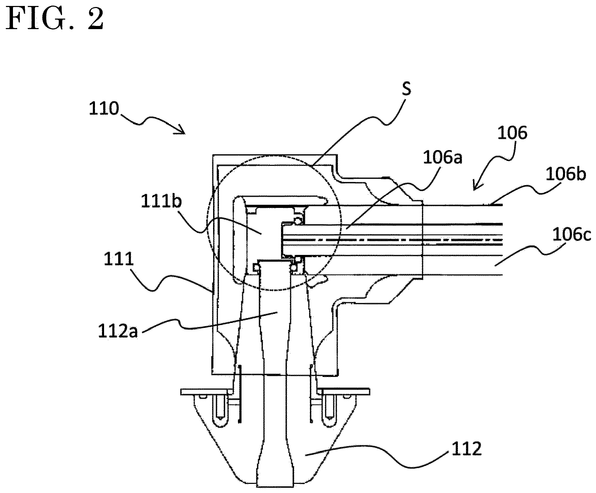

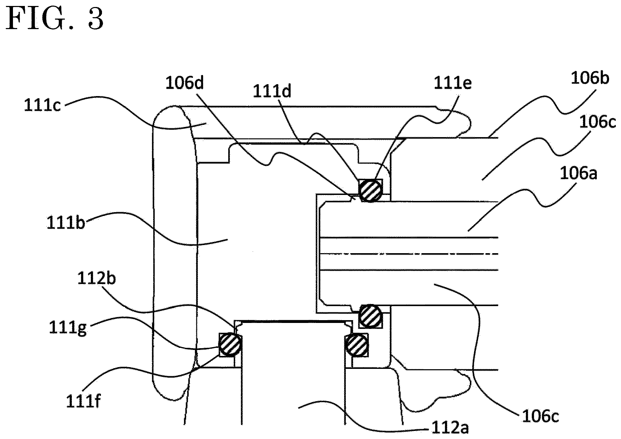

The solid insulation bus 106 is connected to the gas insulated switchgear 100 via the bus connection device 110. FIG. 2 is a side sectional view showing the bus connection device in embodiment 1. The bus connection device 110 includes an adapter portion 111 which is a connection part to the solid insulation bus 106, and the bushing portion 112 which is a connection part to the gas insulated switchgear 100. The adapter portion 111 has an opening on one side (right side in FIG. 3) in the axial direction of the solid insulation bus 106, and the solid insulation bus 106 is inserted into this opening. The solid insulation bus 106 has a bus conductor 106a at the center, and has an insulating layer 106b and a ground conductive layer 106c around the bus conductor 106a.

The adapter portion 111 also has an opening on one side in a direction perpendicular to the axial direction of the solid insulation bus 106 (lower side in FIG. 2), and the bushing portion 112 is inserted into this opening. The bushing portion 112 extends in the direction perpendicular to the axial direction of the solid insulation bus 106 and has, therein, a conductor portion 112a having an end connected to an internal device of the gas insulated switchgear 100.

A connection terminal 111b is provided inside the adapter portion 111. The connection terminal 111b is connected to the bus conductor 106a of the solid insulation bus 106 and is connected to another end of the conductor portion 112a of the bushing portion 112. Thus, the bus conductor 106a of the solid insulation bus 106 and the conductor portion 112a of the bushing portion 112 are connected via the connection terminal 111b in the adapter portion 111. Since one end of the conductor portion 112a of the bushing portion 112 is connected to the internal device of the gas insulated switchgear 100, the internal device of the gas insulated switchgear 100 and the solid insulation bus 106 are connected via the bus connection device 110. At the time of actually connecting the solid insulation bus 106 to the gas insulated switchgear 100, the adapter portion 111 is attached to the other end of the bushing portion 112, and the solid insulation bus 106 is connected to the adapter portion 111.

FIG. 3 is an enlarged sectional view of a part S in FIG. 2. The connection terminal 111b has a recess into which the bus conductor 106a is inserted, at a surface opposed to the solid insulation bus 106. A groove 111d is provided on a side surface of this recess (a surface opposed to the outer circumferential surface of the bus conductor 106a). A contact member 111e is attached to the groove 111d. The contact member 111e has a ring shape surrounding the circumference of the bus conductor 106a, and has high conductivity and high spring property. The contact member 111e is made of a copper alloy or the like. The contact member 111e contacts with both of the connection terminal 111b and the bus conductor 106a, to ensure conduction between the connection terminal 111b and the bus conductor 106a. The connection terminal 111b also has a recess into which the conductor portion 112a is inserted, at a surface opposed to the bushing portion 112. A groove 111f is provided on a side surface of this recess (a surface opposed to the outer circumferential surface of the conductor portion 112a). A contact member 111g is attached to the groove 111f. The contact member 111g has a ring shape surrounding the circumference of the conductor portion 112a, and is made of a copper alloy or the like, as with the contact member 111e. The contact member 111g contacts with both of the connection terminal 111b and the conductor portion 112a, to ensure conduction between the connection terminal 111b and the conductor portion 112a.

The bus conductor 106a has, at an end part thereof, a projection 106d to be engaged with the contact member 111e. The conductor portion 112a has, at an end part thereof, a projection 112b to be engaged with the contact member 111g.

The adapter portion 111 is made of rubber, and when the solid insulation bus 106 and the bushing portion 112 are inserted into the adapter portion 111, insulation performance at insulation interfaces is ensured by the surface pressure of rubber. By the surface pressure of rubber, the adapter portion 111 is subjected to a load in a direction opposite to the insertion direction of the solid insulation bus 106. Considering this, the contact member 111e and the projection 106d in an engaged state have a structure that can withstand the above surface pressure load. For example, the contact area between the contact member 111e and the projection 106d may be made sufficiently large. Thus, the contact member 111e and the projection 106d serve as a come-off stopper structure. The same applies to the contact member 111g and the projection 112b.

A high-voltage-side conductive layer 111c of the solid insulation bus 106 is provided around the connection terminal 111b. This forms a structure for relaxing an electric field around the connection conductor 111b.

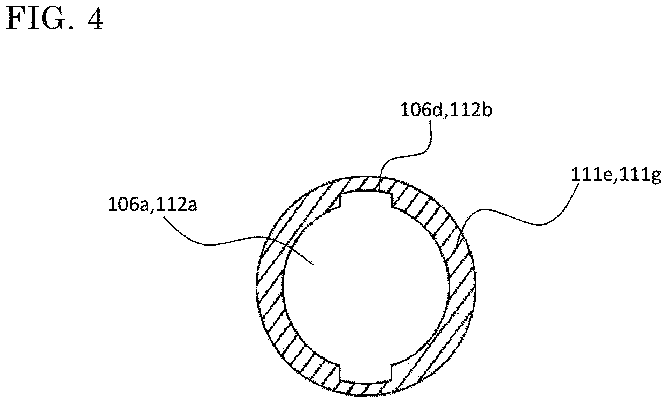

FIG. 4 is a view of each of the contact member 111e and the contact member 111g shown in FIG. 3, as seen from the insertion direction of each of the bus conductor 106a and the conductor portion 112a, and illustrates the come-off stopper structure according to embodiment 1. The projection 106d (projection 112b) only has to be provided at least at two parts on the bus conductor 106a (conductor portion 112a). The projection 106d (projection 112b) may be provided at three or more parts or over the entire range of the outer circumference.

In embodiment 1, the gas insulated switchgear is described as an example of an electric device connected to the solid connection bus. However, without limitation thereto, any electric device such as a switchgear may be applied as long as a plurality of the electric devices are connected via the solid connection bus.

In embodiment 1, the contact member is provided also on the bushing portion side. However, the contact member may be provided only on the solid insulation bus side.

According to embodiment 1, it is possible to prevent the insulation performance of the insulation bus from being lowered when the insulation bus is connected. More specifically, the conductive contact member to contact with the bus conductor of the solid insulation bus is provided at the connection terminal in the adapter portion. Thus, conduction with the bus conductor is ensured, and therefore it is unnecessary to attach an insulating plug as in the conventional case. As a result, production of metal chips at the time of attaching the insulating plug does not occur, and thus the insulation performance is not lowered by such chips.

The conductor portion of the bushing portion and the bus conductor of the solid insulation bus each have a projection at the end part thereof, and the projection and the contact member are engaged with each other. This provides a come-off stopper prevention function so that the solid insulation bus does not readily come off after inserted.

In addition, since attachment of the insulating plug is not needed, work is completed by merely inserting the solid insulation bus, and thus assemblability is improved.

### Embodiment 2

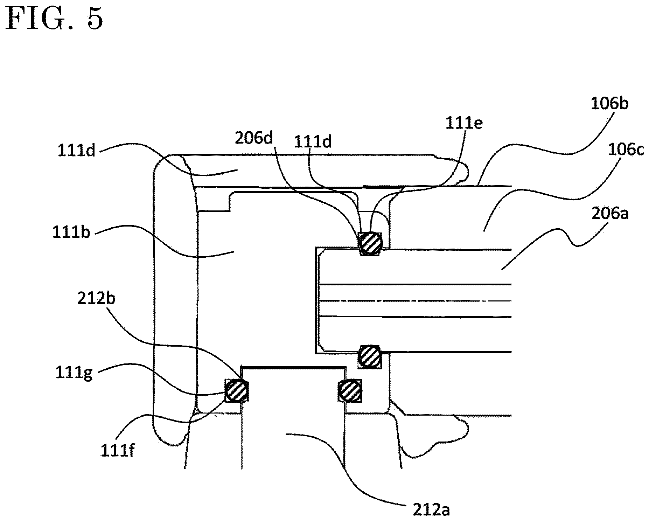

Next, embodiment 2 will be described with reference to FIG. 5. The same or corresponding parts as those in FIG.

1 to FIG. 4 are denoted by the same reference characters, and the description thereof is omitted. In embodiment 2, the basic structure is the same as that in FIG. 1, but there is a difference in that, in embodiment 1, the projection is used as an engagement portion, whereas in embodiment 2, a groove is used as an engagement portion. FIG. 5 is an enlarged sectional view showing a bus connection device in embodiment 2 and corresponds to the part S in FIG. 2 in embodiment 1. A bus conductor 206a has, at an end part thereof, a groove 206d to be engaged with the contact member 111e. A conductor portion 212a has, at an end part thereof, a groove 212b to be engaged with the contact member 111g. The groove 206d is engaged with the contact member 111e by the contact member 111e fitting into the groove 206d, thus serving as a come-off stopper structure for the bus conductor 206a. The groove 212b is engaged with the contact member 111g by the contact member 111g fitting into the groove 212b, thus serving as a come-off stopper structure for the conductor portion 212a.

The other matters are the same as in embodiment 1 and therefore the description thereof is omitted.

According to embodiment 2, the same effects as in embodiment 1 can be provided.

In addition, since the contact member is fitted into the groove and thus serves as a come-off stopper prevention, the bus conductor of the solid insulation bus and the conductor portion of the bushing portion are more unlikely to come off, as compared to embodiment 1.

In addition, the amounts of materials needed for manufacturing the conductor portion of the bushing portion and the bus conductor of the solid insulation bus can be reduced. That is, in embodiment 1, since the projections are provided to the bus conductor of the solid insulation bus and the like, thick conductor materials having diameters greater than required conductor diameters need to be used and cut to form the projections. In contrast, in embodiment 2, since the grooves are provided to the bus conductor of the solid insulation bus and the like, it is only necessary to use materials having required conductor diameters and form the grooves. Thus, the diameters of conductor materials needed for the bus conductor and the like can be reduced, whereby the material cost can be reduced.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

100 gas insulated switchgear
106 solid insulation bus
106a, 206a bus conductor
106d projection
110 bus connection device
111 adapter portion
111b connection terminal
111e, 111g contact member
112 bushing portion
112a, 212a conductor portion
112b projection
206d groove
212b groove

## Claims

1. A bus connection device for connecting each of a plurality of electric devices and an insulation bus for connecting the plurality of electric devices, the bus connection device comprising:
an adapter portion into which the insulation bus is inserted, the adapter portion having, therein, a connection terminal having an opening into which a bus conductor of the insulation bus is inserted;
a bushing portion having a conductor portion therein and having one end connected to the electric device and another end inserted into the adapter portion, so as to be connected to the insulation bus via the connection terminal; and
a conductive contact member provided to the opening of the connection terminal so as to contact with the bus conductor.

2. The bus connection device according to claim 1, wherein
the contact member is engaged with an engagement portion provided at an end part of the bus conductor.

3. The bus connection device according to claim 1 or 2, wherein
the connection terminal has a second opening into which the conductor portion of the bushing portion is inserted, and a conductive second contact member is provided to the second opening so as to contact with the conductor portion of the bushing portion.

4. The bus connection device according to claim 3, wherein
the second contact member is engaged with an engagement portion provided at an end part of the conductor portion.

5. The bus connection device according to claim 2 or 4, wherein
the engagement portion is a projection provided at the end part of the bus conductor.

6. The bus connection device according to claim 2 or 4, wherein
the engagement portion is a groove which is provided at the end part of the bus conductor and into which the contact member is fitted.

7. The bus connection device according to claim 4, wherein
the engagement portion is a projection provided at the end part of the conductor portion.

8. The bus connection device according to claim 4, wherein
the engagement portion is a groove which is provided at the end part of the conductor portion and into which the contact member is fitted.
